# EUROPÄISCHE PATENTANMELDUNG

(11) **EP 1 855 192 A2**
(43) Veröffentlichungstag der Anmeldung: **14.11.2007**
(21) Anmeldenummer: 07006192.4
(22) Anmeldetag: 26.03.2007
(51) Int. Cl.: G06F 9/38

(54) **Verfahren und Computerprogrammprodukt zur Ausführung eines Programms auf einem Prozessor mit Multithreading-Architektur**

(30) Priorität: 02.05.2006 DE 102006020178
(71) Anmelder: Fujitsu Siemens Computers GmbH, 80807 München (DE)
(72) Erfinder: Gross, Jürgen, 83026 Rosenheim (DE)
(74) Vertreter: Epping - Hermann - Fischer

(57) **Zusammenfassung**

Das erfindungsgemäße Verfahren zum Ausführen eines Programms auf einem Prozessor mit Multithreading-Architektur umfasst die folgenden Schritte: Es werden mindestens zwei Prozesse des Programms identifiziert, wobei die Prozesse unabhängig voneinander parallel ausführbar sind und im Wesentlichen gleiche gemeinsame Ressourcen nutzen. Die mindestens zwei identifizierten Prozesse werden unterschiedlichen Threads des Prozessors zugeordnet und anschließend wird das Programm durch paralleles Ausführen der mindestens zwei identifizierten Prozesse in den zugeordneten Threads ausgeführt. Dadurch, dass solche Prozesse identifiziert werden, die im Wesentlichen gleiche gemeinsame Ressourcen nutzen, sinkt die Wahrscheinlichkeit, dass Kapazitätsgrenzen solcher Einheiten des Prozessors überschritten werden, die beim Prozessor nicht mehrfach vorgesehen sind.

## Beschreibung

Die Erfindung betrifft ein Verfahren zum Ausführen eines Programms auf einem Prozessor mit Multithreading-Architektur, bei dem Hardware-unterstützt mehrere Threads parallel ausgeführt werden können. Die Erfindung betrifft weiterhin ein Computerprogrammprodukt, das zur Durchführung des Verfahrens geeignet ist.

Prozessoren verfügen üblicherweise über eine zentrale Recheneinheit (Arithmetic and Logic Unit, ALU), von der sequenziell Befehle abgearbeitet werden. Die Befehle und durch diese Befehle bearbeitete Daten werden aus einem Hauptspeicher geladen und, gegebenenfalls über sogenannte Pipelines, der zentralen Recheneinheit zur Verfügung gestellt. Ohne weitere Vorkehrungen kann auf diese Weise die maximale Leistung der Recheneinheit eines modernen Prozessors jedoch kaum genutzt werden, da zu verarbeitende Befehle und Daten häufig nicht schnell genug aus dem Hauptspeicher nachgeliefert werden können. Es werden daher üblicherweise schnelle Zwischenspeicher, so genannte Cache-Speicher für zumindest einen Teil der von der Recheneinheit benötigten Daten bereitgestellt. Oft sind diese Cache-Speicher auf dem selben Chip oder aber zumindest im selben Gehäuse wie der Prozessor angeordnet, so dass die Recheneinheit effektiv auf sie zugreifen kann. Ein solcher Cache-Speicher kann seine Vorteile vor allem dann ausspielen, wenn mehr als einmal auf einen Datenwert zugegriffen wird, da beim ersten Zugriff auch der Cache-Zwischenspeicher zunächst aus dem Hauptspeicher aufgefüllt werden muss. Neben Cache-Speichern für Daten, also für die Inhalte von Speicherzellen, ist auch üblich, Cache-Speicher im Zusammenhang mit der Adressübersetzung bei Prozessoren mit virtueller Speicheradressierung vorzusehen. Solche Cache-Speicher werden auch als Translocation Lookaside Buffer (TLB) bezeichnet. Im Folgenden ist, falls nicht im Einzelfall näher spezifiziert, unter der Bezeichnung Cache-Speicher jede Form eines schnellen Zwischenspeichers eines Prozessors zu verstehen, unabhängig davon, ob es sich um einen Daten oder einen Adressspeicher handelt.

Da die Cache-Speicher üblicherweise vollständig oder teilweise als assoziative Speicher auf der Basis schneller statischer Speicherzellen ausgeführt ist, sind ihre Kapazitäten meist aus Kostengründen gegenüber dem Hauptspeicher relativ klein. Als Folge müssen im Betrieb häufig Einträge der Cache-Speicher verworfen werden, um Platz für neue Einträge aus dem Hauptspeicher zu schaffen. Aus diesen Gründen kann auch beim Einsatz von schnellen Cache-Speichern im Betrieb eines Prozessors die vollständige Auslastung seiner Recheneinheit unter Umständen nicht erreicht werden.

Bei Prozessoren mit einer Hardware-unterstützten Multithreading-Architektur sind Teile des Prozessors mehrfach oder zumindest zweifach ausgeführt, so dass der Prozessor nach außen, also gegenüber dem Betriebssystem und Anwendungsprogrammen sich wie mehrere Prozessoren darstellt. Computersysteme mit einem Prozessor mit Multithreading-Architektur werden:daher manchmal auch als logische Multiprozessorsysteme bezeichnet. Ein solcher Prozessor ist in der Lage, mehrere Programmstränge oder Prozesse in Form so genannter Threads quasi parallel auszuführen. Üblicherweise sind einige der Funktionseinheiten eines Prozessors, wie zum Beispiel Befehlszähler, Register und Interrupt-Steuerung, mehrfach ausgeführt,wohingegen die aufwändig zu implementierenden Teile wie Recheneinheit und Cache-Speicher nur einfach vorhanden sind. Die Threads werden in schnellem Wechsel von dem gemeinsam genutzten zentralen Recheneinheit abgearbeitet (quasi parallel). Sollte einer der Threads auf Daten warten müssen, wird währenddessen ein anderer Thread von der zentralen Recheneinheit bearbeitet, wodurch deren Auslastung ansteigt. Die Zuteilung von Verarbeitungszeit zu den einzelnen Threads wird üblicherweise vom Prozessor selber vorgenommen. Die Einrichtung von Threads, das heißt das Zuordnen bestimmter Programmstränge oder Prozesse zu einem Thread, kann dagegen meist über das Betriebssystem beeinflusst werden.

Wenn in den quasi parallelen Threads sehr Ressourcenintensive Prozesse abgearbeitet werden, kann jedoch auch bei einem Prozessor mit Multithreading-Architektur eine Vollauslastung der zentralen Recheneinheit dann nicht erreicht werden, wenn es zu Engpässen bei weiteren nicht duplizierten Einheiten kommen. Beispielsweise kann bei speicherintensiven Prozessen, die auf eine große Datenmenge im Hauptspeicher zurückgreifen, die Kapazität der Cache-Speicher nicht ausreichen, um die Daten aller quasi parallelen Threads gleichzeitig zwischenspeichern zu können. Jedesmal, wenn der Prozessor dann von der Bearbeitung eines Threads zu der Bearbeitung eines nächsten Threads wechselt (im Folgenden kurz als Thread-Wechsel bezeichnet), müssen dann dem ersten Thread zugeordnete Daten aus dem Cache-Speicher verworfen werden, um Platz für die Daten des nächsten Threads zu schaffen. Die Leistungsvorteile, die die Multithreading-Architektur bieten kann, werden durch diesen Umladeprozess unter Umständen zunichte gemacht oder sogar ins Gegenteil verkehrt.

Aufgabe der Erfindung ist daher, ein Verfahren anzugeben, durch das ein Programm auf einem Prozessor mit Multithreading-Architektur effektiv und mit möglichst guter Ausnutzung der Prozessorleistung ausgeführt werden kann. Es ist eine weitere Aufgabe der Erfindung, ein zur Durchführung des Verfahrens geeignetes Computerprogrammprodukt anzugeben.

Diese Aufgabe wird gelöst durch die Merkmale der unabhängigen Patentansprüche. Vorteilhafte Ausgestaltungen der Erfindung sind in den jeweiligen abhängigen Ansprüchen gekennzeichnet.

Gemäß einem ersten Aspekt der Erfindung wird die Aufgabe gelöst durch ein Verfahren zum Ausführen eines Programms auf einem Prozessor mit Multithreading-Architektur. Das Verfahren umfasst die folgenden Schritte: Es werden mindestens zwei Prozesse des Programms identifiziert, wobei die Prozesse unabhängig voneinander parallel ausführbar sind und im Wesentlichen gleiche gemeinsame Ressourcen nutzen. Die mindestens zwei identifizierten Prozesse werden unterschiedlichen Threads des Prozessors zugeordnet und anschließend wird das Programm durch paralleles Ausführen der mindestens zwei identifizierten Prozesse in den zugeordneten Threads ausgeführt.

Dadurch, dass solche Prozesse identifiziert werden, die im Wesentlichen gleiche gemeinsame Ressourcen nutzen, steigt die Wahrscheinlichkeit, dass die von beiden Threads genutzten Ressourcen gleichzeitig in den von ihnen gemeinsam genutzten Einheiten des Prozessors vorgehalten werden können. Bei einem Thread-Wechsel, das heißt wenn der Prozessor von der Bearbeitung eines ersten zur Bearbeitung eines zweiten Threads übergeht, brauchen die gemeinsam genutzten Einheiten des Prozessors nicht von den Ressourcen, die der erste Thread nutzt, auf die Ressourcen, die der zweite Thread nutzt, umgestellt werden. Die Zeit, die das Umstellen auf die jeweils anderen Ressourcen benötigt, wird eingespart und die mindestens zwei Prozesse des Programms und damit das Programm selber können vom Prozessor effektiv bearbeitet werden.

In einer vorteilhaften Weiterbildung des Verfahrens sind die gleichen gemeinsam genutzten Ressourcen Speicherbereiche eines Hauptspeichers eines Computers. Besonders bevorzugt ist dann, im Schritt des Identifizierens der Prozesse nur solche Prozesse zu identifizieren, bei denen die gemeinsam genutzten Speicherbereiche zu zumindest einem Zeitpunkt einen ähnlich großen Umfang haben, wie ein für den Prozessor vorgesehener Cache-Speicher.

Prozesse, die einen großen Speicherbereich als Ressource nutzen, können nicht mit beliebigen anderen, unter Umständen ebenfalls speicherintensiven Prozessen parallel ausgeführt werden, ohne dass es zur beschriebenen Problematik beim Thread-Wechsel kommt. Das erfindungsgemäße Verfahren kann jedoch unter den angegebene Vorraussetzungen auch bei Prozessen, die einen großen Speicherbereich als Ressource nutzen, ein vorteilhaftes paralleles Ausführen der Prozesse ermöglichen, ohne dass ein nachteiliges Umladen der Cache-Speicher beim Thread-Wechsel auftritt.

In einer weiteren vorteilhaften Ausgestaltung des Verfahrens umfasst der Schritt des Identifizierens der mindestens zwei Prozesse das Bestimmen von durch die Prozesse genutzten Ressourcen. Auf diese Weise lässt sich das erfindungsgemäße Verfahren für beliebige Programme einsetzen.

In einer weiteren Ausgestaltung des Verfahrens umfasst der Schritt des Identifizierens der mindestens zwei Prozesse das Bestimmen von Aufgaben der Prozesse, wobei sich aus den Aufgaben die genutzten Ressourcen implizit ergeben. Wird das Verfahren bei Programmen eingesetzt, bei denen aufgrund der Aufgabe einzelner Prozesse des Programms deren Ressourcen-Nutzung bereits feststeht, kann diese Tatsache vorteilhaft ausgenutzt werden, um den Schritt des Identifizierens von Prozessen, die im Wesentlichen gleiche gemeinsame Ressourcen nutzen, zu vereinfachen.

Gemäß einem zweiten Aspekt wird die Aufgabe durch ein Computerprogrammprodukt mit Programmcode zur Ausführung eines Computerprogramms auf einem Computer gelöst, wobei bei der Ausführung des Programmcodes eines der angegebenen Verfahren ausgeführt wird.

In einer vorteilhaften Ausgestaltung ist das Computerprogrammprodukt zur dynamischen Emulation von nicht-nativen Programmcode auf einem Prozessor eingerichtet, wobei in einem der mindestens zwei parallel in unterschiedlichen Threads ausgeführten Prozessen ein Teil des nativen Programmcodes interpretiert wird, während in einem anderen der mindestens zwei parallel ausgeführten Prozesse der selbe Teil des nativen Programmcodes kombiniert wird. In dieser Ausgestaltung des Computerprogrammprodukts wird ausgenutzt, dass sich aus den Aufgaben des Programms die genutzten Ressourcen implizit ergeben. Ansonsten entsprechen die sich ergebenden Vorteile des zweiten Aspekts denen des ersten Aspekts.

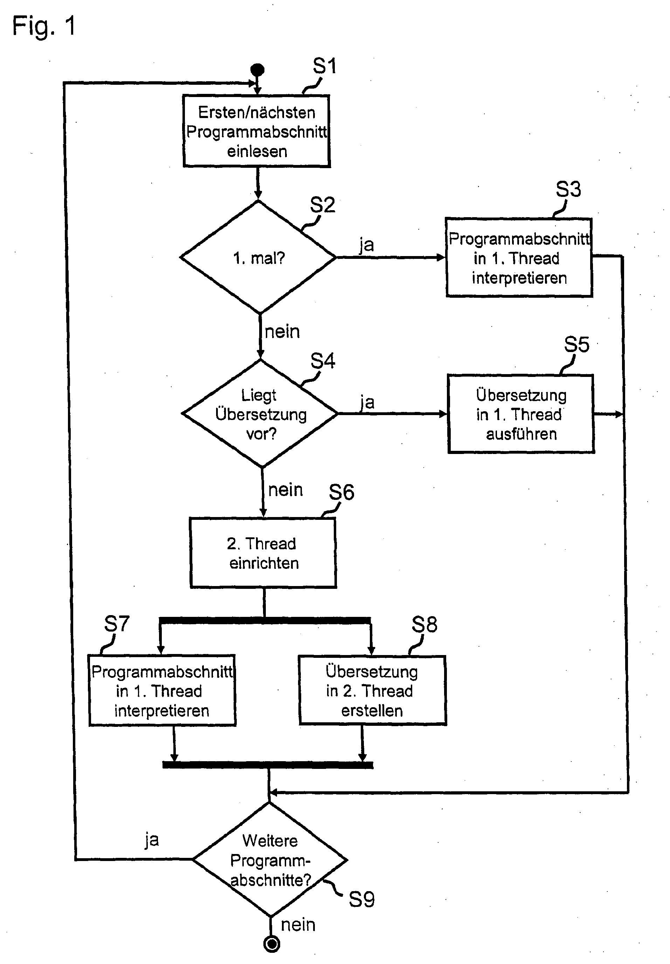

Die Erfindung wird nachfolgend anhand eines Ausführungsbeispiels mithilfe einer Figur näher erläutert. Die Figur zeigt ein Flussdiagramm eines Verfahrens zur Emulation von nicht-nativen Programmcode auf einem Prozessor mit Multithreading-Architektur, bei dem von dem erfindungsgemäßen.Verfahren gebraucht gemacht wird.

Es ist zunächst nur ein erster Thread vorgesehen, in dem das Verfahren wie folgt beschrieben sequenziell durchgeführt wird. Erst im Laufe des Verfahrens wird zu einem geeigneten Zeitpunkt ein zweiter Thread eingesetzt, um auf möglichst effektive Weise die Multithreading-Architektur des Prozessors zur schnellen und effizienten Ausführung des Emulationsverfahrens zu nutzen.

Die Vorteile des erfindungsgemäßen Verfahrens kommen dabei am besten, aber nicht ausschließlich, dann zum Tragen, wenn parallel zum ersten Thread kein Thread eines weiteren Programms neben dem Emulator ausgeführt wird. Grundsätzlich ist das erfindungsgemäße Verfahren auch auf Prozesse anwendbar, die verschiedenen Programmen zugeordnet sind. Aus Sicherheitsgründen und wegen der bei moderneren Prozessoren üblicherweise eingesetzten Technik der virtuellen Adressierung sind die Adressräume, d.h. die genutzten Speicherbereiche, verschiedener Programme jedoch meist strikt getrennt, so dass solche Prozesse keine überlappenden Speicherressourcen aufweisen.

Nach dem Start des Verfahrens wird in einem ersten Schritt S1 ein erster Abschnitt des zu emulierenden Programmcodes eingelesen. Das hier beschriebene Verfahren dient der dynamischen Emulation des nicht-nativen Programmcodes. Zum Emulieren von nicht-nativen Programmcode sind aus dem Stand der Technik verschiedene Verfahren bekannt. Zum Einen kann der zu emulierende Programmcode Befehl für Befehl eingelesen und umgesetzt werden. Dieses ist auch als Interpretieren bekannt. Eine zweite Möglichkeit besteht darin, den Programmcode abschnittsweise einzulesen, jeden Abschnitt voraus zu übersetzen und anschließend auszuführen. Ein solcher Emulator ist auch als Just-in-Time-Compiler bekannt. Eine dritte Möglichkeit ist die dynamische Emulation, die als eine Mischform der beiden erstgenannten Möglichkeiten angesehen werden kann. Wie bei einem Just-in-Time-Compiler wird der zu emulierende Programmcode abschnittsweise eingeladen, danach jedoch zunächst interpretiert und erst wenn festgestellt wird, dass ein Programmabschnitt häufiger ausgeführt wird, wird er für alle weiteren Ausführungen übersetzt. Das hier vorgestellte Verfahren beschreibt eine solche dynamische Emulation. Methoden, nach denen der in Schritt 1 eingeladene Abschnitt des Programmcodes festgelegt wird, sind dabei bekannt. Beispielsweise können Sprungbefehle als ein Trennungskriterium zur Festlegung der Abschnitte eingesetzt werden. In dem Schritt S1 werden neben dem Abschnitt des zu emulierenden Programmcodes auch Informationen zur Ablaufsteuerung, die im Laufe des Verfahrens gesammelt werden, eingeladen. Diese Informationen umfassen beispielsweise, wie oft der eingelesene Abschnitt des Programmcodes bereits ausgeführt wurde.

In einem zweiten Schritt S2 wird anhand dieser Zusatzinformationen bestimmt, ob der eingelesene Programmabschnitt zum ersten Mal auszuführen ist. Falls ja verzweigt das Verfahren zu einem Schritt S3 in dem dieser Programmabschnitt Befehl für Befehl interpretiert wird. Der Schritt S3 wird in demselben ersten Thread ausgeführt, in dem auch die Schritte S1 und S2 auf den Prozessor ausgeführt wurden.

Wenn der gesamte zu emulierende Programmabschnitt interpretiert ist, verzweigt das Verfahren von Schritt S3 zu einem Schritt S9, in dem abgefragt wird, ob der zu emulierende Programmcode vollständig abgearbeitet wurde. Wenn dem so ist, wird das Verfahren beendet andernfalls verzweigt das Verfahren zurück zu dem Schritt S1, in dem daraufhin der nächste zu emulierende Programmabschnitt eingelesen wird.

Falls in Schritt S2 festgestellt wurde, dass der zu emulierende Programmabschnitt nicht zum ersten Mal bearbeitet wurde, verzweigt das Verfahren von Schritt S2 zu einem Schritt S4.

In dem Schritt S4 wird anhand der Zusatzinformationen ermittelt, ob zu dem eingelesenen zu emulierenden Programmabschnitt bereits eine Übersetzung vorliegt. Falls dem so ist, verzweigt das Verfahren zu einem Schritt S5, in dem die zum Programmabschnitt vorliegende Übersetzung ausgeführt wird. Wie bereits die Interpretation im Schritt S3, wird auch die direkte Ausführung der Übersetzung im Schritt S4 in dem ersten Thread durchgeführt. Ist die Ausführung beendet, verzweigt das Verfahren wiederum zu einem Schritt S9, von wo aus das Verfahren entweder beendet wird oder zur Bearbeitung eines nächsten Programmabschnitts zurück zu Schritt S1 verzweigt.

Wurde in dem Schritt S4 festgestellt, dass noch keine Übersetzung zu dem zu emulierenden Programmabschnitt vorliegt, verzweigt das Verfahren zu einem Schritt S6.

In dem Schritt S6 wird vom Verfahren ein neuer, zweiter Thread zur quasi parallelen Ausführung zu dem ersten Thread, in dem das Verfahren bisher ablief, eingerichtet. Wie bereits zuvor erwähnt, stellt sich ein Prozessor mit Multithreading-Architektur dem Betriebssystem und damit den Anwendungsprogrammen wie ein Multiprozessorsystem dar. Über ein Multiprozessorsysteme unterstützendes Betriebssystem kann somit den einzelnen logischen Prozessoren und damit letztlich den einzelnen Threads eines Prozessors mit Multithreading-Architektur verschiedene Prozesse zugeordnet werden.

Im Verfahren werden dementsprechend im Folgenden in den Schritten S7 und S8 zwei Prozesse quasi parallel in dem ersten und dem zweiten Thread ausgeführt. In Schritt S7 wird im ersten Thread der zu emulierende Programmabschnitt analog zu Schritt S3 interpretiert. Parallel dazu wird in dem Schritt S8 in dem zweiten Thread der zu emulierende Programmabschnitt kompiliert. Beide Schritte, also Interpretieren und Kompilieren, die in den beiden Threads zum Ablauf gebracht werden, bearbeiten damit ein und denselben zu emulierenden Programmabschnitt. Von beiden Threads wird daher auf im Wesentlichen überlappende Speicherbereiche zugegriffen, da beide Threads sowohl auf den zu emulierenden Programmabschnitt als auch auf die von diesen bearbeiteten Daten im Hauptspeicher zugreifen.

Im dargestellten Verfahren werden folglich zwei Prozesse, die unabhängig voneinander parallel ausführbar sind und im Wesentlichen gleiche gemeinsame Ressourcen nutzen über die Aufgaben, die diese Prozesse im Verfahren haben, identifiziert. Wegen des großen Überlapps an gemeinsam genutztem Speicher ist auch bei einem großen Ressourcenbedarf jedes Einzelprozesses mit hoher Wahrscheinlichkeit gegeben, dass bei einem Thread-Wechsel keine Inhalte von Cache-Speicher (sowohl Daten-Cache als auch Translocation Lookaside Buffer) Inhalte getauscht werden müssen. Die Rechenleistung des Prozessors kann damit optimal und effektiv ausgenutzt werden.

Für das dynamische Emulationsverfahren ergibt sich der Vorteil, dass die Interpretation in Schritt S7 weiter ausgeführt wird und gleichzeitig durch die Kompilation in Schritt S8 eine Übersetzung für eine eventuelle weitere Wiederholung des erarbeiteten Programmabschnitts zur Verfügung steht. Würden beide Schritte nacheinander ausgeführt, also zum Beispiel erst kompiliert und danach die Übersetzung ausgeführt, würden die Vorteile, die sich aus der Multithreading-Architektur des Prozessors ergeben nicht zur Beschleunigung des Emulationsverfahrens eingesetzt werden können. Würde demgegenüber grundsätzlich ein Vorausübersetzen parallel zum Abarbeiten von zuvor erstellten Übersetzungen in zwei Threads ausgeführt, ist nicht gegeben, dass die beiden parallel ausgeführten Threads sich in den benutzten Speicherbereichen günstig überschneiden. Als Folge steigt die Wahrscheinlichkeit, dass beim Thread-Wechsel Inhalte der Cache-Speicher verworfen und nachgeladen werden müssen.

Nach Beendigung der Übersetzung in dem Schritt S8 wird der zweite Thread zunächst nicht weiter benutzt. Nach dem auch die Interpretation in Schritt S7 beendet ist wird das Verfahren folglich nur in diesem ersten Thread weitergeführt. Üblicherweise wird der Schritt S8 vor dem Schritt S7 beendet sein, da das reine Kompilieren weniger aufwändig ist als das Interpretieren. Falls dem ausnahmsweise nicht so sein sollte, kann vorgesehen sein, dass am Ende von Schritt 7 auf die Fertigstellung der Übersetzung in Schritt S8 gewartet wird. In einer Alternative kann vorgesehen sein, nach Beendigung des Schrittes S7 mit dem Verfahren fortzuführen, unabhängig davon ob der Schritt S8 bereits komplett ausgeführt wurde oder nicht. In dem Falle ist lediglich vor einer eventuellen Nutzung der in Schritt S8 erstellten Übersetzung im weiteren Verfahrensablauf dessen Fertigstellung abzuwarten. Nach abgeschlossenem Schritt S7 verzweigt das Programm wie nach den Schritten S3 und S5 zu dem Schritt S9, um entweder beendet zu werden oder mit der Bearbeitung eines nächsten Programmabschnittes wieder zu Schritt 1 zu verzweigen.

In dem dargestellten Emulationsverfahren konnte vorteilhafterweise aus der Aufgabe des Interpretierens beziehungsweise Kompilierens ein und desselben zu emulierenden Programmcodeabschnitts auf einfache Weise die Bestimmung von parallel ausführbaren Prozessen, die gemeinsame Ressourcen nutzen erfolgen. In alternativen Ausführungsformen des erfindungsgemäßen Verfahrens kann eine Identifizierung solcher Prozesse auch direkt über die genutzten Ressourcen erfolgen. Beispielsweise ist möglich, von zwei Prozessen nacheinander jeweils nur einen ersten Abschnitt auszuführen und am Ende der Ausführung dieses Abschnitts den Ressourcenverbrauch, also beispielsweise die genutzten Speicherbereiche, zu bestimmen und deren Überlapp zu ermitteln. Danach wird entschieden, ob im Sinne des erfindungsgemäßen Verfahrens diese Prozesse quasi parallel in nebenläufigen Threads ausgeführt werden oder es vorteilhafter ist, die Prozesse nacheinander in einem Thread ablaufen zu lassen. Da Prozesse über ihre Ausführungszeit üblicherweise keinen konstanten Ressourcenverbrauch haben, sondern sich dieser dynamisch während der Laufzeit ändert, kann vorgesehen sein, eine solche Überprüfung des Überlapp gemeinsam benutzten Ressourcen wiederholt zu verschiedenen Zeitpunkten durchzuführen.

## Patentansprüche

1. Verfahren zum Ausführen eines Programms auf einem Prozessor mit Multithreading-Architektur mit den Schritten:
- Identifizieren von mindestens zwei Prozessen des Programms, die unabhängig voneinander parallel ausführbar sind und im Wesentlichen gleiche gemeinsame Ressourcen nutzen,
- Zuordnen der mindestens zwei identifizierten Prozesse zu unterschiedlichen Threads des Prozessors und
- Ausführen des Programms durch paralleles Ausführen der mindestens zwei identifizierten Prozesse in den zugeordneten Threads.

2. Verfahren nach Anspruch 1, bei dem die gleichen gemeinsam genutzten Ressourcen Speicherbereiche eines Hauptspeichers eines Computers sind.

3. Verfahren nach Anspruch 2, bei dem im ersten Schritt nur solche Prozesse identifiziert werden, bei denen die gemeinsam genutzten Speicherbereiche zu zumindest einem Zeitpunkt einen ähnlich großen Umfang haben, wie ein für den Prozessor vorgesehener Cache-Speicher.

4. Verfahren nach einem der Ansprüche 1 bis 3, bei dem der Schritt des Identifizierens der mindestens zwei Prozesse das Bestimmen von durch die Prozesse genutzten Ressourcen umfasst.

5. Verfahren nach einem der Ansprüche 1 bis 3, bei dem der Schritt des Identifizierens der mindestens zwei Prozesse das Bestimmen von Aufgaben der Prozesse umfasst, wobei sich aus den Aufgaben die genutzten Ressourcen implizit ergeben.

6. Computerprogrammprodukt mit Programmcode zur Ausführung eines Computerprogramms auf einem Computer, **dadurch gekennzeichnet, dass**
bei der Ausführung des Programmcodes ein Verfahren nach einem der Ansprüche 1 bis 5 ausgeführt wird.

7. Computerprogrammprodukt nach Anspruch 6, das zur dynamischen Emulation von nicht nativem Programmcode auf einem Prozessor eingerichtet ist, wobei in einem der mindestens zwei parallel in unterschiedlichen Threads ausgeführten Prozessen ein Teil des nativen Programmcodes interpretiert wird, während in einem anderen der mindestens zwei parallel ausgeführten Prozesse derselbe Teil des nativen Programmcodes compiliert wird.
